# EUROPÄISCHE PATENTANMELDUNG

(11) **EP 1 494 334 A2**
(43) Veröffentlichungstag der Anmeldung: **05.01.2005**
(21) Anmeldenummer: 04013806.7
(22) Anmeldetag: 11.06.2004
(51) Int. Cl.: H02J 7/02

(54) **Batterieladegerät**

(30) Priorität: 02.07.2003 DE 10329692
(71) Anmelder: Jungheinrich Aktiengesellschaft, 22047 Hamburg (DE)
(72) Erfinder: Röpcke, Ole, 22587 Hamburg (DE)
(74) Vertreter: Patentanwälte Hauck, Graalfs, Wehnert, Döring, Siemons, Schildberg

(57) **Zusammenfassung**

Batterieladegerät mit einem an Netzspannung anschließbaren Transformator, dessen Sekundärwicklung an eine Gleichrichterbrückenschaltung angeschlossen ist und einer Korrekturschaltung, dadurch gekennzeichnet, daß ein Korrekturwiderstand in einen Zweig der Gleichrichterbrückenschaltung geschaltet ist.

## Beschreibung

Die Erfindung bezieht sich auf ein Batterieladegerät nach dem Patentanspruch.

Grundbaustein eines Ladegeräts ist ein Gleichrichter. Er wird üblicherweise vom Stromnetz gespeist. Netzgleichrichter haben somit die Aufgabe, Gleichspannungen und Gleichströme bestimmter Größe zu liefern. Durch Gleichrichtung von Gleichströmen entstehen bekanntlich Mischströme, die einen Gleichstromanteil und Wechselstromanteile verschiedener Frequenzen enthalten. Bei einem Anschluß an ein öffentliches Wechselstromnetz ist zu beachten, daß die Stromanteile der Wechselstromanteile höherer Ordnung bestimmte Grenzwerte nicht überschreiten. Ggf. ist erforderlich, diese durch schaltungstechnische Maßnahmen zu begrenzen. Die Begrenzung geschieht mit passiven oder aktiven Bauelementen. Passive Bauelemente sind wegen des geringeren Aufwands den aktiven vorzuziehen.

Aus US 0055322917 A ist eine Korrekturschaltung für Netzgleichrichter bekannt geworden, welche aus zwei parallel arbeitenden Gleichrichterschaltungen besteht, wobei der Ausgangsstrom einer Gleichrichterschaltung durch eine große LC-Kombination in der Phasenlage verschoben wird. Die Überlagerung des diese beiden Schaltungen speisenden Versorgungsstroms weist einen geringeren Oberwellenanteil auf als eine herkömmliche Schaltung mit Brückengleichrichter.

Aus JP 100 32 981 A ist ebenfalls eine Korrekturschaltung bekannt, welche auf der gleichen Funktion wie die oben beschriebene beruht.

Aus JP 60223476 ist eine Schaltungsanordnung für ein Netzgleichrichter bekannt geworden mit zwei parallel arbeitenden Gleichrichterschaltungen, wobei jede Gleichrichterschaltung durch die Beschaltung mit einer Spule oder einem Kondensator phasenverschoben arbeitet.

Aus DE 201 08 335 ist bekannt geworden, an die Sekundärseite eines Transformators zwei Gleichrichterschaltungen zu schalten, wobei diese von der Sekundärwicklung mit unterschiedlichen Ausgangsspannungen gespeist werden. Um Kurzschlußströme zu vermeiden, wird die Stromabgabe der Gleichrichterschaltung mit der höheren Spannung durch eine Spule begrenzt.

Es ist ein Ladegerät bekannt geworden (Firma BENNING), bei dem der gleichgerichtete Strom über eine Zusatzsekundärwicklung des Transformators geführt wird. Diese erhöht in der ersten Spannungswelle die treibende Spannung und damit den Ladestrom, während sie in der zweiten Spannungswelle eine entgegengesetzte Wirkung hat. Dies führt zu einer abweichenden Stromaufnahme in den beiden Halbwellen, was sich in einer Veränderung des Oberwellenspektrums im Versorgungsstrom bemerkbar macht. Dabei werden insbesondere die kritischen dritten und fünften Oberwellenamplituden abgesenkt. Nachteilig bei dieser Lösung ist die Wechselwirkung der Zusatzwicklung mit dem in Ladegeräten üblichen Streufeld der Transformatoren. Sie erfordert daher eine hohe Sorgfalt in der Konstruktion und Produktion des Transformators. Ferner ist eine zusätzliche Leistungsverkabelung notwendig, da der gleichgerichtete Strom noch einmal über den Transformator geführt werden muß. Schließlich ist eine von üblicher Aufbau- und Verdrahtungsstruktur abweichende Schaltungsanordnung vorzusehen, wodurch Servicekräfte fehlgeführt werden können und es zu Fehlern kommen kann.

Der Erfindung liegt die Aufgabe zugrunde, ein Ladegerät für Batterien zu schaffen, welches bei Einhaltung der Grenzwerte für die Oberwellen gegenüber bekannten Schaltungsanordnungen einfacher, d. h. mit weniger Aufwand, hergestellt werden kann.

Diese Aufgabe wird durch die Merkmale des Patentanspruchs gelöst.

Bei dem erfindungsgemäßen Batterieladegerät ist in einem Brückenzweig der Gleichrichterbrückenschaltung ein Korrekturwiderstand mit dem Gleichrichter in Reihe geschaltet. Üblicherweise enthält die Gleichrichterbrückenschaltung in den Brückenzweigen Dioden. Mithin liegt der Widerstand in Reihe mit einer Diode. Während einer Halbwelle wird der Widerstand von Strom durchflossen. Während dieser Halbwelle reduziert sich der abgegebene Ladestrom, während der Widerstand in der zweiten Halbwelle keine Wirkung zeigt. Dies führt mithin zu einer etwas abweichenden Stromaufnahme in den beiden Halbwellen, was sich in einer Veränderung des Oberwellenspektrums im Versorgungsstrom bemerkbar macht. Dabei werden insbesondere die kritischen dritten und fünften Oberwellenamplituden abgesenkt.

Gegenüber herkömmlichen Schaltungsanordnungen, bei denen Kondensatoren oder Spulen verwendet werden, ist der Einsatz eines ohmschen Widerstands deutlich weniger aufwendig. Ein besonderer Vorteil der erfindungsgemäßen Schaltungsanordnung liegt auch in der Möglichkeit, den Widerstand in die üblicherweise in Ladegeräten verwendeten Plattengleichrichter zu integrieren. Der zusätzliche Verdrahtungsaufwand reduziert sich auf ein Minimum. Der modifizierte Plattengleichrichter weist die gleichen Anschlüsse mit der gleichen Funktion auf, wie der nicht modifizierte Gleichrichter. Aufbau- und Verdrahtungsstruktur im Ladegerät verändern sich mithin nicht. Es kann daher auch nicht zu Fehlschaltungen in der Produktion und bei der Wartung kommen.

Ein Ausführungsbeispiel der Erfindung wird nachfolgend anhand einer Zeichnung näher erläutert.

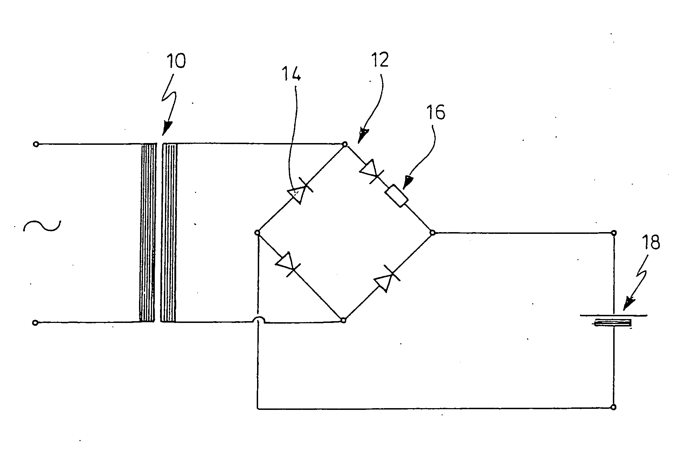

Die einzige Figur zeigt ein Batterieladegerät nach der Erfindung.

In der Figur wird ein Transformator 10 mit Netzspannung versorgt. An die Sekundärwicklung des Transformators 10 ist eine übliche Gleichrichterbrückenschaltung 12 mit jeweils einer Diode 14 in jedem Brückenzweig angeschlossen. In einem der Brückenzweige befindet sich ein ohmscher Widerstand 16. Die andere Diagonale der Gleichrichterbrückenschaltung 12 ist an eine Batterie 18 geschaltet, die über das gezeigte Ladegerät aufgeladen wird.

Der Widerstand 16 ist nur während einer Halbwelle von Strom durchflossen. Während dieser Halbwelle reduziert er den abgegebenen Ladestrom, während er in der zweiten Halbwelle keine Wirkung hat. Dies führt zu einer abweichenden Stromaufnahme in den beiden Halbwellen mit der Folge, daß insbesondere die Amplituden der kritischen dritten und fünften Oberwelle abgesenkt werden.

## Patentansprüche

1. Batterieladegerät mit einem an Netzspannung anschließbaren Transformator, dessen Sekundärwicklung an eine Gleichrichterbrückenschaltung angeschlossen ist und einer Korrekturschaltung, **dadurch gekennzeichnet, daß** ein Korrekturwiderstand (16) in einen Zweig der Gleichrichterbrückenschaltung (12) geschaltet ist.
